Europäisches Patentamt

European Patent Office

Office européen des brevets

(19)

(11) Publication number: **0 380 143**
**A2**

(12) # EUROPEAN PATENT APPLICATION

(21) Application number: **90104284.6**

(22) Date of filing: **07.10.86**

(51) Int. Cl.5: **B01D 53/30, B01D 53/36**

This application was filed on 06-03-1990 as a divisional application to the application mentioned under INID code 60.

(43) Date of publication of application:
**01.08.90 Bulletin 90/31**

(60) Publication number of the earlier application in accordance with Art.76 EPC: **0 263 195**

(84) Designated Contracting States:
**DE FR GB SE**

(71) Applicant: **NIPPON KOKAN KABUSHIKI KAISHA**
**1-2, 1-chome, Marunouchi**
**Chiyoda-ku Tokyo(JP)**

(72) Inventor: **Ase, Hajime, c/o Patent Division,**
**Nippon Kokan**
**Kabushiki Kaisha, 1-2, 1-chome, Marunouchi**
**Chiyoda-ku, Tokyo(JP)**

(74) Representative: **Popp, Eugen, Dr. et al**
**MEISSNER, BOLTE & PARTNER**
**Widenmayerstrasse 48 Postfach 86 06 24**
**D-8000 München 86(DE)**

(54) **An apparatus for denitration of exhaust gas.**

(57) An apparatus for reducing the amount of nitrogen oxide comprises a device (30) for estimating the amount of generated $NO_x$ from information concerning a burning status of an incinerator (1), an ammonia injection device (13) injecting ammonia into said incinerator (1) according to a determined amount of injection a set value of $NO_x$ and the burning status information, a subtractor (16) for obtaining a difference between the set value of $NO_x$ and measured value of $NO_x$, a feedback control device (31) for determining the injection amount of ammonia according to the difference output of said subtractor, and a parameter correction device (32) for obtaining an output for correcting an injection amount control parameter.

F I G. 1

EP 0 380 143 A2

## An apparatus for denitration of exhaust gas

This invention relates to an apparatus for denitration of exhaust gas discharged from a refuse incinerator into the atmosphere, according to the preamble of the claim.

As is well known in the art, when refuse is burned in an incinerator, nitrogen oxide $NO_x$ is discharged into atmosphere, giving rise to pollution problems. To reduce the nitrogen oxide $NO_x$, ammonia $NH_3$ is injected into the high temperature exhaust gas at the outlet of the refuse incinerator. However, the amount of nitrogen oxide discharged from the refue incinerator varies continously, depending on the kind and amount of refuse desposited in the incinerator. Therefore, if a method of injecting a constant amount of ammonia is employed, it is sometimes possible that the permissible level of $NO_x$ discharge is exceeded.

From the DE-A-2 657 617 are known a method and device for reducing the amount of nitrogen oxide $NO_x$ by injecting ammonia $NH_3$. It is proposed to control the actual amount of $NO_x$ as well as oxigene concentration in the exhaust gas, wherein the information of the rate of air supplied into the incinerator, the information of the rate of fuel, and the information of the $CO_2$-concentration in the exhaust gas are taken into account.

Also the DE-A-3 337 793 refers to a method and device for reducing the amount of nitrogen oxide $NO_x$ by injecting ammonia $NH_3$. This method includes a control of the concentrations of $NO_x$ and supplied air at a point before a catalyst for a catalytic denitration reaction between $NO_x$ and $NH_3$. As this reaction depends on the temperature, because the activity of the catalyst depends on the temperature, said method includes also the step of controlling the gas temperature before the said catalyst.

The DE-A-2 902 706 also proclaims a method and device for denitration of exhaust gas by a catalytic reaction between $NO_x$ and $NH_3$. Also this method includes the measurement of the temperature of the exhaust gas, because a decrease of the temperature results in an increase of the amount of absorbed $NH_3$ at the surface of the catalyst.

An object of the present invention is to provide an apparatus for denitrating exhaust gas by non-catalytic reaction between $NO_x$ and $NH_3$, which can control the amount of nitrogen oxide discharged from an incinerator to a rate below the permissible limit by controlling the injection amount of ammonia to an optimum value at a minimum time delay or process delay from the instant the ammonia $NH_3$ is injected until the results of measurement of the nitrogen oxide are determined, and thereby optimize the refuse incinerator operating costs.

The aforementioned object of the invention is solved by the features of the characterizing part of the claim.

The present invention avoids any consumption of a catalyst, and further is characterized by a rather instantaneous process control.

This invention can be more fully understood from the following detailed description when taken in conjunction with the accompanying drawings, in which:

Fig. 1 is a block diagram showing an embodiment of the exhaust gas denitration apparatus according to the invention;

Fig. 2 is a flow chart showing the operation of a parameter correction device shown in Fig. 1;

Figs. 3A and 3B are graphs showing the results of control by the apparatus shown in Fig. 1 and results obtainable in the prior art.

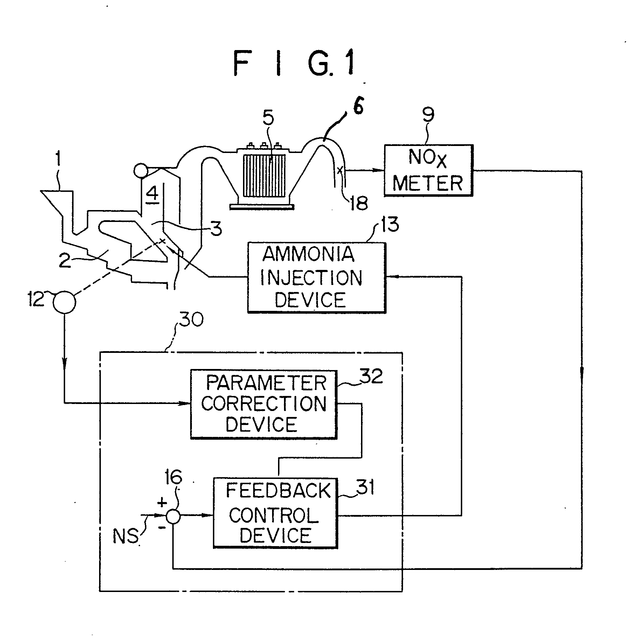

Now, a preferred embodiment of the invention will be described in detail with reference to the drawings. Referring to Fig. 1, there is shown a refuse incinerator. Incinerator body 1 includes burning chamber 2, ammonia injection section 3, heat exchange section 4, electric dust collection section 5 and exhaust gas detection section 6. Refuse is deposited into burning chamber 2 through refuse inlet (not shown). The refuse is then burnt with air supplied from a not shown air supply unit. High temperature gas produced as a result of the burning is passed through ammonia injection section 3 to heat exchange section 4. In heat exchange section 4, steam is generated by utilizing the heat of the high temperature exhaust gas, and the steam is then supplied to the outside for power generation, for instance. The exhaust gas, having been reduced in temperature, is fed to dust collector 5 for dust collection and then fed to exhaust gas detection section 6. In exhaust gas detection section 6 a $NO_x$ detector element 18 is provided, and a detection output thereof is fed to $NO_x$ meter 9. $NO_x$ meter 9 provides output data which represents the concentration of $NO_x$ in the exhaust gas from detection section 6.

The flow rate of air supplied from the said air supply unit into burning chamber 2 is measured by a air flow meter (not shown). In high temperature ammonia injection section 3, a temperature sensor element coupled to thermometer 12 is provided to measure the temperature of a zone where ammonia injected from an ammonia injection device 13 reacts with $NO_x$ in exhaust gas.

The flow rate of steam from heat exchange section 4 is detected by a flow meter (not shown). Reference numeral 30 designates injection amount control unit, which has a function of receiving information of temperature in NH₃ injection section 3 and altering control parameter of an injection amount feedback control device 31 according to the received temperature information. More specifically, injection amount control unit 30 includes a parameter correction device 32 for receiving a temperature detection signal provided from ammonia injection section thermometer 12, obtaining a control parameter according to the temperature of injection section 3 and setting the control parameter in parameter correction device 32 for setting the same as injection feedback control section 31, injection feedback control device 31 and subtractor 16. The equation for obtaining the control parameter is as follows.

The transfer function G(S) in the PID control applied to feedback control is

$$G(S) = Kp\{1 + (1/T_IS) + T_DS\} \qquad (1)$$

where $K_p$, $T_I$ and $T_D$ are respectively functions of temperature as

$$K_p = K_p(T)$$
$$T_I = T_I(T)$$
$$T_D = T_D(T)$$

where T is the temperature of NH₃ injection section 3.

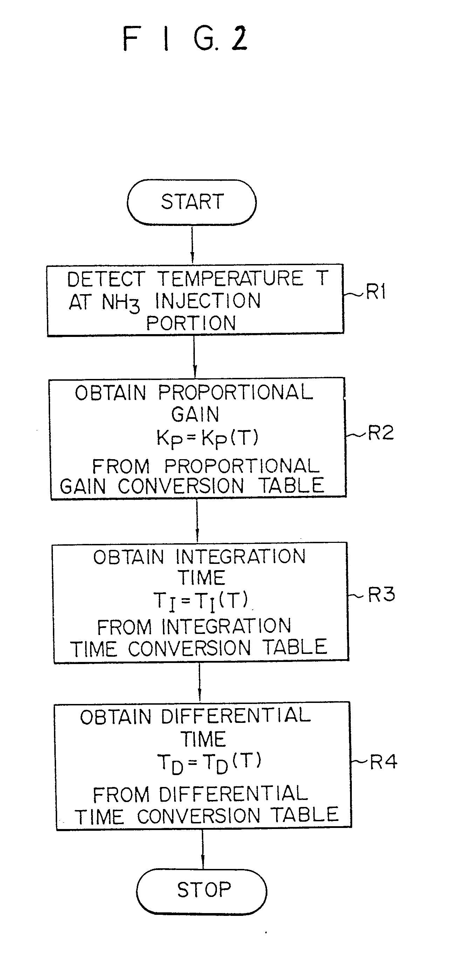

Now, the operation of the apparatus having the above construction will be described with reference to Fig. 2. When incinerator 1 is in operation and discharging exhaust gas, the $NO_x$ concentration in the exhaust gas is detected by exhaust gas $NO_x$ concentration meter 9, and the concentration detection signal is sent to subtractor 16. Subtractor 16 feeds a difference signal between the detection signal and $NO_x$ set value NS to injection feedback control device 31.

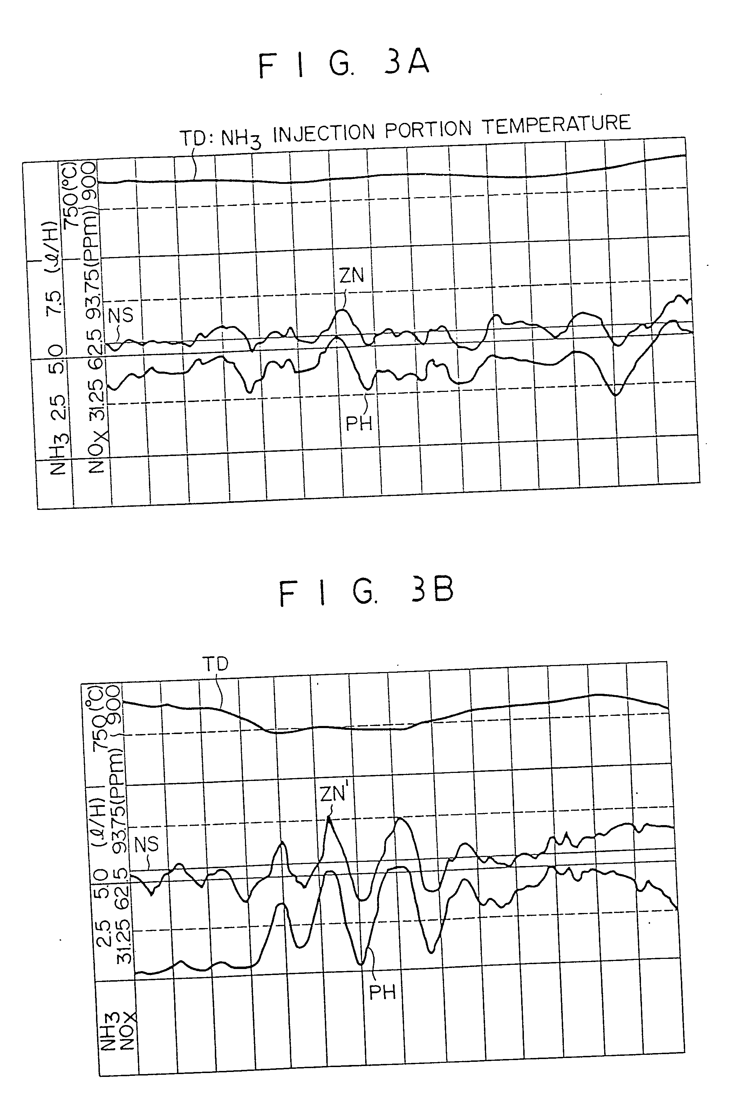

In step R1, thermometer 12 detects the temperature T of NH₃ injection section 3 and feeds the corresponding temperature detection signal to parameter correction device 32. In steps R2 to R4, parameter correction device 32 calculates a control parameter corresponding to the injection amount of NH₃ from the temperature detection signal using equation (3). Thus, a proportional gain $Kp = Kp(T)$ is obtained at step R2 by using a proportional gain conversion table. Also, an integration time $T_I = T_I(T)$ is obtained at the integration time conversion table at step R3. Then, a differential time $T_D = T_D(T)$ is obtained by a differential time conversion table at step R4. The control parameter of injection amount feedback control device 31 is altered. Thus, injection amount feedback control device 31 feeds an injection control signal, for controlling the concentration of $NO_x$ in the exhaust gas to $NO_x$ set value NS, to ammonia injection section 13 according to the altered control parameter. Fig. 3A shows the result of the above operation. The $NO_x$ concentration ZN in the exhaust gas is controlled to $NO_x$ set value NS.

As has been shown, in the above embodiment parameter correction device 32 is provided, which alters the control parameter according to the temperature of NH₃ injection section 3. Thus, it is possible to alter the control parameter of injection amount feedback control device 31 according to the temperature of NH₃ injection section 3 related to generation of $NO_x$. It is thus possible to hold the $NO_x$ concentration in the exhaust gas below the limit value NS without causing delay of process and without injection of a wasteful amount of NH₃. This means that a difference can be clearly recognized in comparison to the conventional method shown in Fig. 3B. Further, it is possible to control the $NO_x$ concentration to set value NS even with respect to variations of the incinerator outlet temperature TD.

## Claims

An apparatus for denitrating exhaust gas, comprising:
means (18, 9) for detecting the concentration of nitrogen oxide in an exhaust gas from an incinerator (1);
means for obtaining information concerning the burning status of said incinerator related to the amount of generated nitrogen oxide;
means (30) for determining the amount of ammonia to be injected according to the obtained information; and means (13) for injecting ammonia into said incinerator (1) according to the determined amount of injection, **characterized in that** said means for obtaining information includes:
temperature detection means (12) for detecting the temperature of a zone (3), into which said ammonia is injected; wherein said means (30) for determining the amount of ammonia includes:
means (32) for obtaining an output for correcting an injection amount control parameter according to said obtained information;
means (16) for obtaining the difference between a set value of generated nitrogen oxide and detected nitrogen oxide concentration; and
injection amount feedback control means (31) for obtaining an injection amount of ammonia according to said parameter correction output and difference.

# F I G. 1

# F I G. 2

START

↓

DETECT TEMPERATURE T
AT NH$_3$ INJECTION
PORTION — R1

↓

OBTAIN PROPORTIONAL
GAIN
$K_P = K_P(T)$
FROM PROPORTIONAL
GAIN CONVERSION TABLE — R2

↓

OBTAIN INTEGRATION
TIME
$T_I = T_I(T)$
FROM INTEGRATION
TIME CONVERSION TABLE — R3

↓

OBTAIN DIFFERENTIAL
TIME
$T_D = T_D(T)$
FROM DIFFERENTIAL
TIME CONVERSION TABLE — R4

↓

STOP

# F I G. 3A

TD: NH₃ INJECTION PORTION TEMPERATURE

# F I G. 3B